Europäisches Patentamt

European Patent Office

Office européen des brevets

(19)

(11) Publication number: **0 122 750
B1**

(12) **EUROPEAN PATENT SPECIFICATION**

(45) Date of publication of patent specification: **15.06.88**

(51) Int. Cl.⁴: **F 16 H 57/10**

(21) Application number: **84302291.4**

(22) Date of filing: **04.04.84**

(54) Safety parking brake for automatic transmissions.

(30) Priority: **15.04.83 US 485513
02.03.84 US 585397**

(73) Proprietor: **Barr, William Alexander
Gibson Island Maryland 21056 (US)**

(43) Date of publication of application:
**24.10.84 Bulletin 84/43**

(72) Inventor: **Barr, William Alexander
Gibson Island Maryland 21056 (US)**

(45) Publication of the grant of the patent:
**15.06.88 Bulletin 88/24**

(74) Representative: **Spall, Christopher John et al
BARKER, BRETTELL & DUNCAN 138 Hagley
Road
Edgbaston Birmingham B16 9PW (GB)**

(84) Designated Contracting States:
**DE FR GB IT SE**

(56) References cited:
**GB-A-1 320 926
GB-A-1 398 235
GB-A-2 029 530
US-A-3 601 230
US-A-3 952 838**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to automatic transmissions for vehicles and more particularly to safety means for preventing an automatic transmission from suddenly moving from park into reverse as a result of accidental positioning by the driver of the shift lever intermediate its reverse and park positions while the engine is running.

Automatic transmission for vehicles are almost invariably provided with a parking gear connected to an output shaft of the transmission. When the vehicle is to be parked, the driver moves the shift lever from a drive or neutral position past a reverse position and into its park position. For every position of the shift lever except park, a spool valve is moved to direct flow of pressure fluid within the transmission to control vehicle drive. When parking, the spool valve is first moved from its reverse to a non-drive position and the shift lever operates some form of a control rod for driving a cam, often in the form of a cone carried by or attached to the control rod, against a parking pawl to move it against an opposing bias force towards the parking gear. Because more often than not the pawl engages the surface of a tooth rather than the space between two teeth of the gear, provisions must be made for enabling the driver to move the shift lever into its full park position when the pawl engages a tooth. The means for accomplishing this is some form of yielding spring which bears against the cone or cam to urge it towards the pawl when the shift lever is moved into its park position, with the spring collapsing when the pawl hangs up on a tooth surface but after the vehicle drifts a slight distance to align the space between two teeth on the parking gear with the pawl the spring expands against the cone or cam to drive and retain the pawl in its parked position between two teeth.

Such an arrangement is shown in GB—A— 2 029 530, and is satisfactory provided the driver moves the shift lever into its full park position. That document reveals the features set out in the precharacterising part of claim 1. Sometimes, however, the driver is careless and moves the shift lever sufficiently to ensure that the spool valve is moved out of its reverse position, thus stopping the vehicle but he does not move the lever fully into park. Under these circumstances, when the pawl engages the outer surface of a tooth and the vehicle does not drift a slight additional amount yieldable means can anchor on the now-fixed pawl and react in the opposite direction against the cam or control rod to drive the mechanism from its partially parked position to its reverse position thus causing the vehicle to move suddenly and unexpectedly in reverse.

The foregoing problem has been recognised and numerous law suits have been instituted against automobile manufacturers resulting in the awards of costly damages. Heretofore attempts to combat the problem have involved a re-design of the gates or slots into which the driver moves the shift lever for the various vehicle functions, particular attention being given to the slots for reverse and park which are invariably adjacent each other. These re-designs were intended to induce the driver at the shift lever end of the mechanism to make certain that the shift lever was fully engaged in the park slot when the vehicle was to be parked, but these re-designs have failed to eliminate the problem and accidents and litigation continue.

Another attempt at solving the problem is shown in a study "Investigation of New Shift Assist and Warning Indicator Concepts" by the Ford Motor Company, dated 12th December 1978 (Reference Library, Department of Transportation, Washington D.C., U.S.A.). In this proposal the shift lever is provided with a clevis carrying a roller, which engages with a spring-loaded ramp member. The ramp has a flat portion with which the roller engages for all movements of the shift lever except from reverse to park, so that no moment is exerted on the lever for these movements. However, when the lever is moved from reverse to park the roller rides up the ramp, whose spring-loading urges it in a direction which urges the roller towards the park position. This proposal, while addressing the problem by redesigning the transmission end of the system, has the disadvantage of being relatively complex, and if it fails may cause the transmission to be inoperative.

My invention, as defined in the appended claims provides a simple arrangement for ensuring that when the shift lever is moved from reverse to park there is a force acting to prevent the system returning to reverse. This is achieved by means of a pivoted member spring-loaded into sliding engagement with a surface on an element connected to the shift lever, the surface having a first part on which the member slides for all movements of the lever except from reverse to park, and a second cam-like part which the member engages when the lever is moved from reverse towards park in order to restrain movement of the shift lever to reverse. The arrangement may also be such that in this position the spring-loaded member acts to urge the transmission towards its full park position. It will be noted that on failure, this arrangement does not cause the transmission to be inoperative. My invention therefore overcomes the basic problem described above by redesigning the transmission end of the system, and also overcomes the disadvantages of the Ford proposal.

Furthermore, the arrangement in accordance with my invention can be incorporated in newly built transmissions with minimal and perhaps no change in basic design or can be added to existing transmission itself or any of its operating linkages, and can even be applied to the exterior of the transmission housing at a reasonable cost.

Some embodiments of the invention are illustrated in the accompanying drawings wherein:

Fig. 1 is a broken perspective view showing a conventional detent plate operable by the driver controlled shift lever and showing one form of the present invention incorporated in the control rod for the parking brake;

Fig. 2 is a schematic side elevational view showing the control rod as it moves from a drive position towards its park position;

Fig. 3 is a view similar to Fig. 2 showing the control rod in its full park position;

Fig. 4 shows a modification of the invention applied as a separate unit to the exterior of the transmission housing;

Fig. 5 shows the modification of Fig. 4 in a typical drive position; and

Fig. 6 shows the modification of Figs. 4 and 5 in its full park position.

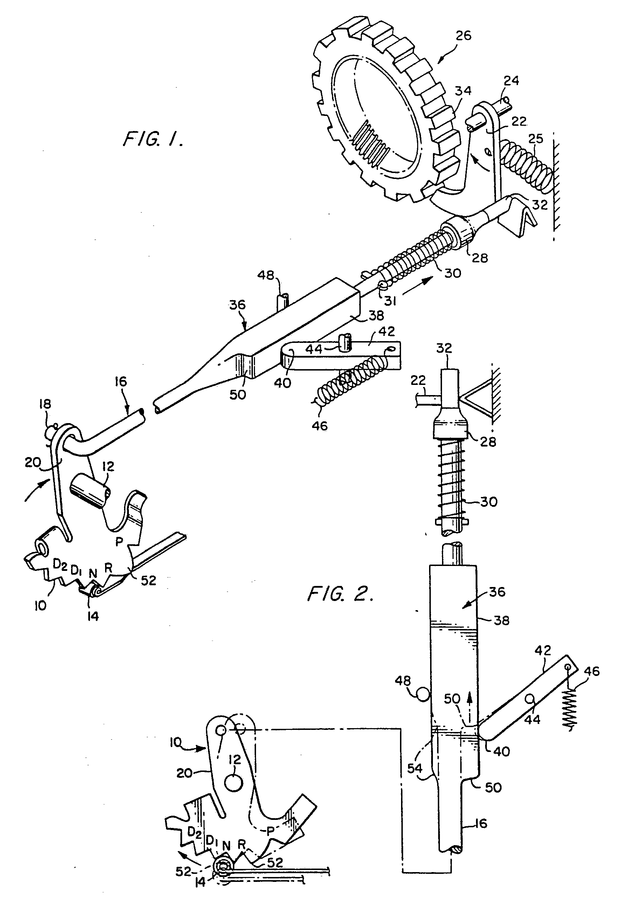

Turning now to the drawings Fig. 1 illustrates the salient components of a well known system for controlling an automatic transmission between various drive, including reverse, and park positions. For driving and reverse a detent plate 10 having a plurality of notches, marked $D_2$, $D_1$, N, R and P, on the periphery thereof is pivotally mounted by a shaft 12 to the interior wall portions of a vehicle automatic transmission housing (not shown). The detent plate has connected thereto in known fashion the end of a spool valve (not shown) which is moved linearly within the transmission to control pressure ports which determine the drive to the vehicle wheels. The shaft 12 is connected by a series of linkages (not shown) to the shift lever (not shown) readily accessible to the vehicle driver. When the operator moves the shift lever to any one of the drive or reverse positions the detent plate and spool valve are moved to a corresponding position and retained in that position by a spring loaded detent 14 which engages the appropriate notch in the detent plate.

The park position of the detent plate is invariably adjacent to reverse so that when one wishes to park the vehicle from a forward drive position, he first brings the vehicle to a halt with the service brakes and then moves the shift lever from a drive position past neutral and reverse into park position. As the detent plate moves towards its park position it moves the spool valve to an inoperative position so that power is no longer transmitted to the vehicle wheels and, at the same time, a control rod 16 having an end 18 connected to an arm 20 of the detent plate, is moved axially in the direction of a pawl 22 which is pivoted at 24 within the transmission housing and biased by a spring 25 away from a toothed parking gear 26 connected to the output shaft (not shown) of the transmission.

Slidably carried on the control rod is a cam member 28 in the form of a cone which is urged at all times by a yielding spring 30 disposed between the cone 28 and a stop 31 on the control rod against an axially extending end portion 32 of the control rod which defines a stop for the cone 28.

As so far described, the mechanism is conventional and as those skilled in the art know, when the shift lever is moved to its park position the control rod is advanced by the detent plate until the cam 28 engages the outer edge of the pawl to urge it against the opposition of the bias spring 24 towards the parking gear 26. Should the pawl be aligned with the space between two teeth so that the pawl enters that space, the vehicle is parked but should the pawl engage the radial outer surface 34 of a tooth, as is the usual case, then the cam hangs up on the stopped pawl but the driver can still move the shift lever into its full park position because the spring 30 yields to permit the rod to move to its full park position while the cam is retained out of that position until the space between two teeth are aligned, by slight drift of the vehicle, with the pawl whereupon the cam is snapped forwards by the spring 30 to drive the pawl into its full park position.

As explained above, in conventional systems not employing the present invention, should the driver carelessly not move the shift lever into its full park position, it is possible for the detent plate to be positioned intermediate its park and reverse positions where, if the engine is still running, the spool valve is placed in a neutral position to remove power to the wheels and the cam is driven by the control rod to bear against the pawl, where, if it engages the outer radial face of a tooth, as is likely and the vehicle were not to drift a slight distance to align the pawl with the space between two teeth, it is possible for the cam spring 30 to react against the cone, which is now anchored on the pawl, to apply sufficient force to the stop 31 on the control rod to drive it and the detent plate from its intermediate position back to its reverse position thus causing the vehicle to move suddenly in reverse.

The present invention eliminates or at least significantly reduces the likelihood of such accidents occurring by modifying the control rod 16 so that instead of its being a rod of uniform diameter from end to end, an intermediate portion 36 thereof is shaped to provide a linear surface 38 which is slidably engaged by the rounded end 40 of a lever 42 pivoted at 44 to the interior of the transmission housing and urged by a spring 46 operating on the opposite end of the lever so that the rounded end 40 of the lever 42 is in close sliding abutment with the linear surface 38 for every position of the control rod except park. Lateral movement of the control rod due to the force of the lever acting thereon is resisted by a suitably positioned guide member 48 which may include a roller. At the end of the liner surface 58 proximate to the detent plate 10 is a step or shoulder 50 which, as the detent plate is moved from reverse to park is engaged by the end 40 of the lever 42 to urge the control rod towards its park position.

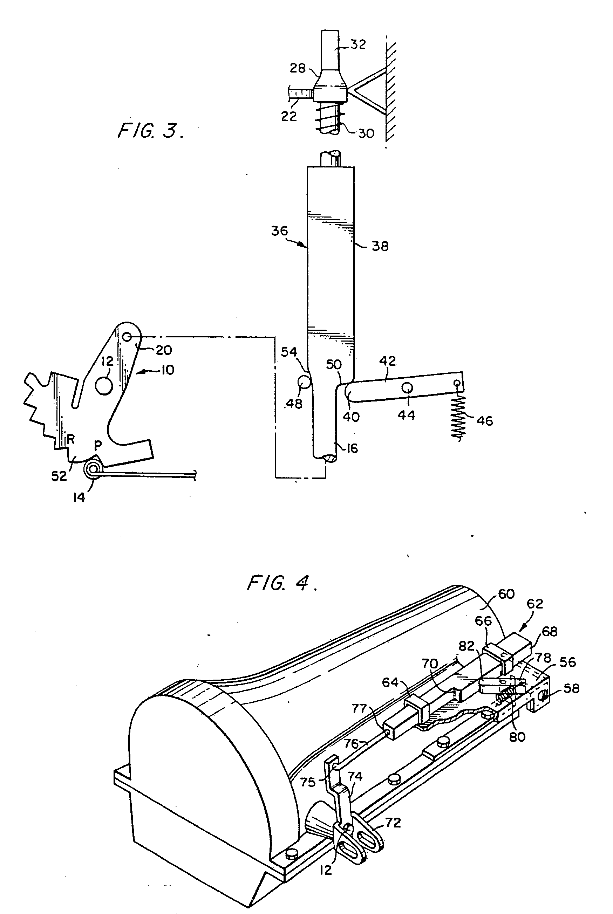

The operation of the embodiment of Fig. 1 should be clear from Figs. 2 and 3. In full lines in Figs. 2, the control rod is shown in the same position as in Fig. 1, that is to say, in the neutral position. Regardless of whether the detent plate is in a drive, neutral or reverse position, the lever end 40 rides on the linear surface 38 and has virtually no effect on the operation of the shift system except to urge the rod laterally against the guide 48 which may be equipped with anti-friction means so that any lateral force on the control rod is substantially undetectable.

The step 50 is located along the length of the linear surface at the point where the detent 14 starts to ride down the outer end of the projection 52 on the detent plate 10 separating the park and reverse notches.

Fig. 2 purports to show the relationship of the step 50 to the projection 52, it being seen that as the detent 14 starts to slide down the face of the projection 52 leading to the bottom of the park notch the lever end 40 begins to engage the stop 50 and begins to exert a force on the control rod in the direction of park. Because the driver will almost invariably move the shift lever more than just to the point where the detent starts its slide down the face of the projection 52, any movement beyond that point allows the lever to exert a greater moment on the control rod which moment increases as the lever 42, either by itself or with the assistance of the shift lever, moves the control rod increasingly towards park, there being a point at which prior to the invention, sufficient instability existed, that accidental reversal could occur, but at which point, with the invention, that instability is eliminated and the control rod is restrained from movement back to the reverse position. Considered in another way, the invention creates, in effect, an opposite fail-safe instability whereby the linkage system is urged or forced into park by action of the spring loaded lever despite the carelessness of the driver.

As can be best seen in Fig. 3 where the control rod has been urged into its full park position by the lever 42, there is provided on the sides of the rod opposite the step 50 a shallow step 54 which engages the guide member 48 to aid in retaining the control rod in its full park position.

The embodiment of Figs. 1 through 3 is well suited to incorporation in original equipment transmissions as they are assembled, substantially the only design changes being the control rod and mountings for the guide 48 and pivot lever 42. The embodiment of Figs. 4 through 6 is adapted to be added to existing, already installed transmissions without requiring entry of any kind into the transmission housing.

With particular reference to Fig. 4, it will be seen that instead of the invention being incorporated into and made an integral part of the control rod, there is provided a separate assembly designed for attachment to the exterior of the transmission housing. The assembly comprises a platform 56 pivotally mounted by a pivot pin 58 to the exterior of the transmission housing 60. A member 62 having on one side edge a profile similar to that on the control rod 38 of the Fig. 1 embodiment, is slidably mounted on the surface of the platform 56 and may be linearly guided by a pair of inverted U-shaped brackets 64, 66. The member 62 has a linear surface 68 and a step or shoulder 70 at the end of the surface 68 proximate to the clevis-like member 72 which is connected by suitable linkages (not shown) to the driver controlled shift lever in a conventional manner for operating the shaft 12 of the detent plate as explained in connection with Fig. 1. It happens that on some existing clevis members there is already provided an arm 74 as shown in Fig. 4 for the purpose of accommodating an alternative connection to the shift lever but if such an arm should not be already supplied, then, for the purposes of the present invention, a clevis having such an arm would have to be provided. Connected to the arm 74 is the L-shaped end 75 of a rod 76 having a screw threaded connection 77 at its opposite end with the end of the slide member 62 for a purpose which will be explained. Pivoted to the surface of the platform 56 is a lever 78 corresponding in configuration and function to the lever 42 of the embodiment of Fig. 1, and, as in Fig. 1, a spring 80 urges the rounded end 82 of the lever 78 into close sliding engagement with the linear surface 68 of the slide member 62. When the shift lever is moved towards its park position the end 82 of the lever engages the shoulder 70 of the slide member to ensure that the clevis member is not only restrained from moving back to reverse but may be driven to its full park position in the event that the driver fails to move the shift lever into its full park position.

The threaded connection 77 of the rod 76 with the slide member 62 permits adjustment of the slide member so that the shoulder 70 can be positioned at the optimum location relative to the position of the detent plate as it is moved from its reverse to its park position. As with the first embodiment the lever 78 should start to engage the shoulder just as the detent starts to slide from the peak of the projection between the reverse and park notches towards to the bottom of the park notch. Because of manufacturing tolerances this may require some slight adjustment for each transmission though obviously precise positioning is not necessary so long as the shoulder is engaged after the peak of the projection has passed beyond the detent, which can be determined simply by manual operation of the clevis from reverse to park by an assembler without removing the transmission housing 60. The assembly of the Figs. 4 through 6 embodiment is pivotally mounted at 58 in order to follow the arc described by the end of the arm 74 when the clevis 72 is moved to its various positions.

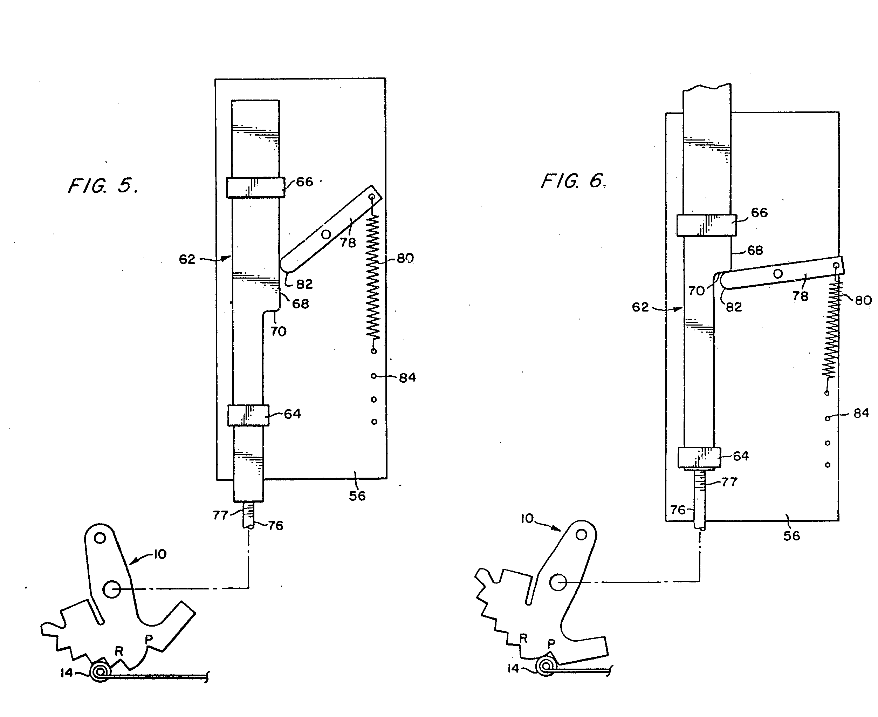

Fig. 5 illustrates the relation of the lever 78 to the slide member 62 for every position of the shift lever and detent plate except park. Fig. 6 illustrates the positions of the lever 78 relative to the step or shoulder 70 when the slide member and detent plate are in their full park position.

It will be understood that it may be desirable to provide in the Figs. 1—3 modification a threaded connection for adjustment purposes similar to the connection 77 in the Figs. 4—6 modification. If necessary the tension on the springs 80 may be adjusted to the proper degree by the provision of a series of openings 84 in the platform as shown in Figs. 5 and 6.

Though no separate housing is shown enclosing the mechanism of Fig. 4, it should be understood that such a housing is desirable and, indeed, would form an integral part of the assembly in order to protect the components from dirt and moisture. Where the rod 76 or end of the slide projects out of the housing, known sealing means can be employed to exclude dirt and moisture from the interior of the housing.

A distinct advantage of the invention is that in the event of failure of any part of the mechanism, say the springs 46, 80, this has no effect on the operability of the transmission and the only result would be to remove the safety feature of the invention.

In achieving safety by the invention there may be a minor trade-off in that more force than formerly may be required to move the shift lever from park to a drive position since the opposing force of the levers 42, 78 must be overcome. Though clearly the force exerted by springs 46, 80 when the levers 42, 78 are engaged with their respective shoulders must be greater than the yielding cam springs 30, the additional shifting effort from park to drive should not be substantially greater than the additional force required to move the shift lever into its full park position against the opposition of the cam spring 30 when the pawl engages the radial surface of a tooth in a conventional transmission not equipped with the present invention. With the invention, however, the driver receives an assist in moving the shift lever towards park which offsets to some degree the opposing force of the yieldable cam spring 30 when the cam does hang up on the surface of a tooth.

Should, however, the force of the lever springs 46, 80 excessively impede initial movement of the control rod away from park, this problem can be alleviated by the provision of means for limiting the effect of the lever on the control rod to a predetermined major proportion of but less than the total travel of the control rod into a full park position whereby the initial movement of the driver operated means, that is to say the control rod or cam, away from park is substantially unimpeded by the lever. After such initial movement, the pawl then bears on a steeper part of the cam so that opposition to further movement of the control rod away from park becomes less noticeable to the driver as the cam withdraws entirely from its engagement with the pawl.

The reduction of the effect of the lever on the control rod in its movement towards park (and hence a consequent reduction of the opposition of the lever away from park) can be accomplished simply by the addition of a stop in the path of movement of the lever, the stop being located so as to be engaged by the lever after the control rod has been moved about 65 to 75% of its distance towards full park. With such an arrangement, there would be no opposition offered by the lever for the first 25 to 35% of the movement of the control rod away from park yet the lever will always be in a position to prevent the return of the control rod to reverse should this unlikely event take place after the rod has been moved either by the driver or by the lever at least 65 to 75% of the distance towards park.

Another means for removing or reducing the effect of the lever in opposition to movement away from park is by selecting the rate of the lever spring in conjunction with its point of connection with one end of the lever relative to its pivot and the other end of the lever where it bears on the cam surfaces of control rod as in Fig. 2 of the element 62 as in Fig. 4. This rate must be such that for about 65 to 75% of the travel of the control rod towards park, the force of the lever on the control rod exceeds the force of the cam spring 30. After such movement of the control rod the lever spring force can fall to zero, as might be achieved simply by the lever spring going solid at that point, or the force of the spring as it collapses, following about 65 to 75% of the movement of the control rod towards park can be reduced so that the lever continues to urge the control rod towards full park but with a force sufficiently diminished that initial movement of the control rod away from park is not significantly detectable by the drive. After the control rod has moved from about 25 to 35% of the distance away from park and the full force of the lever spring opposes further movement of the control rod, this force, so far as the driver is concerned, is diminished due to the fact that the pawl is on the steep part of the cam, as mentioned above, and the driver also receives an assist from the reaction of the pawl spring on the cam and from the cam spring 30 should it, at this stage, be compressed.

Though the invention has been described in connection with a cone cam which is slidable on the control rod, this is for purpose of illustration only, the invention being applicable to an arrangement, for example, where the cam is integral with the control rod and it and the rod, in park position, are urged laterally by yielding spring means against the pawl to drive it into park position between two teeth when the space between the teeth aligns with the pawl.

Though the invention has been shown as applied to a transmission employing an axially movable control rod, the invention is equally applicable to rotary control rods, the only change being that instead of a linear surface having a step at one end, there would be supplied a member having a circular surface of uniform diameter on which the lever 42 rides for all positions except park. At park, there would be a step for engagement by the lever 42 to ensure that the shaft is rotated to its full park position in the event that the shift lever was not moved into full park position.

**Claims**

1. A parking brake for an automatic transmission having a toothed parking gear (26) secured to an output shaft journalled in a stationary housing of a vehicle, a pawl (22) movable in the housing between a park position in which the pawl (22) engages the tooth gear (26) and a non-park position in which it is clear of the gear, driver operated means (10) movable in one direction from reverse towards park position and in the opposite direction from the park towards reverse position, a control rod (16, 76) operably connected to the driver operated means (10), cam means (28) operated in response to movement of the control rod and engageable with the pawl (22) to control its movement towards the parking gear (26) when the driver operated means (10) is moved towards its park position, and to control its movement away from the parking gear (26) when the driver operated means (10) is moved away from its park position, and yieldable resilient means (30) operable on the cam means (28) to enable the driver operated means (10) and the control rod (16) to be moved to their full park positions independently of the cam means (28) when the pawl is prevented by engagement with the surface of a tooth (34) from entering the space between two teeth of the parking gear, characterised in that an element (36, 62) having a sliding surface is operatively connected to the driver operated means (10) for movement therewith, a member (42, 78) having first and second ends, is pivoted at a fixed position remote from one end of the member, and second resilient means (46, 80) urges the one end (40, 82) of the member into sliding engagement with the sliding surface, the surface having a first part (38, 68) which is uniform and continuous so that when the element is moved in response to movement of the driver operated means to every position except between park and reverse positions the surface slides relative to the member without effecting movement thereof, and a second cam-like part (50, 70) which is engaged by the member when the element is moved in response to movement of the driver operated means to a position between park and reverse to restrain through the element movement of the driver operated means towards its reverse position when the driver operated means has been accidentally positioned between its reverse and park positions.

2. The parking brake of claim 1, wherein the member (42, 78) operates the second cam-like part (50, 70) of the sliding surface of the element (36, 62) to urge the driver operated means (10) in the direction of park position following accidental positioning of the driver operated means (10) between its reverse and park position.

3. The parking brake of claim 1, wherein the element (36, 62) is linearly movable by the driver operated means (10) and the first part (38, 68) of the sliding surface is linear, the one end (40, 82) of the pivoted member being resiliently urged into engagement with the linear part of the sliding surface of the element (36, 62) for every position of the driver operated means (10) except park, and the cam-like part (50, 70) of the surface engageable by the member (42, 78) comprises a sloping step (50, 70) in the sliding surface so positioned on the element that as the driver operated means (10) is moved a predetermined distance away from its reverse towards its park position the pivoted member (42, 78) engages the step (50, 70) to urge the element (36, 62) and hence the driver operated means (10) in the direction of its park position.

4. The parking brake of claim 3, wherein the linearly movable element (36) is an integral part of the control rod (16).

5. The parking brake of claim 3, wherein the movable element (62) is slidably mounted on the transmission housing and is connected to the driver operated means (10) separately from the control rod.

6. The parking brake of claim 2, including means (46, 80) for limiting the effect of the member (42, 78) on the element (36, 62) to a predetermined major proportion of but less then the total travel of the element (36, 62) into a full park position whereby the initial movement of the driver operated means away from park position is substantially unimpeded by the member (42, 78).

7. The parking brake of claim 2, wherein the second resilient means (46, 80) operates on the member (42, 78) for resiliently urging the one end of same into engagement with the sliding surface (38, 68) of the element (36, 62), the second resilient means (46, 80) having a preselected rate so that the force exerted thereby through the member (42, 78) on the driver operated means (10) in its movement from reverse towards park position exceeds the force of the yieldable resilient means (30) operable on the cam means (28).

8. The parking brake of claim 7, wherein the rate is preselected so that the force of the second resilient means (46, 80) on the driver operated means exceeds the force of the yieldable resilient means (30) on the cam means (28) for a major portion but not all of the movement of the driver operated means (10) from reverse towards park position and thereafter the force of the second resilient means (46, 80) on the driver operated means diminishes for the remainder of the movement of the driver operated means (10) towards the park position whereby the initial resistance exerted by the second resilient means (46, 80) on the driver operated means upon initial movement thereof from park towards reverse position is reduced.

9. The parking brake of claim 8, wherein the force of the second resilient means (46, 80) on the driver operated means (10) diminishes substantially to zero whereby the initial resistance is reduced substantially to zero.

10. The parking brake of claim 8 or claim 9, wherein the major portion amounts to about 65 to 75% of the movement of the driver operated means (10) from reverse to park position whereby about 25 to 35% of the initial movement of the driver operated means (10) from park to reverse position is substantially unresisted by an opposing force of the second resilient means (46, 80).

11. The parking brake of claim 7, wherein the member comprises a lever (42, 78) having a pivot (44) intermediate its ends, one end (40, 82) of the lever (42, 78) engaging the sliding surface (36, 68) of the element (36, 62) and the other end of the lever being engaged by the second resilient means (46, 80), the rate of the second resilient means (46, 80) being preselected to cooperate with the distance of the respective ends of the lever (42, 78) from the pivot (44).

## Patentansprüche

1. Parksperre für ein automatisches Getriebe mit einem Parkzahnrad (26), das an einer in einem feststehenden Gehäuse eines Fahrzeuges drehbar gelagerten Abriebswelle befestigt ist, einer Klinke (22), die im Gehäuse zwischen einer Park-Stellung, in der sie mit dem Parkzahnrad (26) kämmt, und einer anderen Stellung als der Park-Stellung, in der sie ausreichenden Abstand vom Zahnrad hat, bewegbar ist, einer führerbetätigten Vorrichtung (10), die in einer Richtung aus der Rückwärts- zur Park-Stellung und in der entgegengesetzten Richtung aus der Park- zur Rückwärts-Stellung hin bewegbar ist, einer mit der führerbetätigten Vorrichtung (10) betriebsmäßig verbundenen Betätigungsstange (16; 76), einer Steuerkurve (28), die in Abhängigkeit von einer Bewegung der Betätigungsstange betätigt wird und mit der Klinke (22) in Eingriff bringbar ist, um ihre Bewegung zum Parkzahnrad (26) hin zu steuern, wenn die führerbetätigte Vorrichtung (10) zu ihrer Park-Stellung hin bewegt wird, und um ihre Bewegung vom Parkzahnrad (26) weg zu steuern, wenn die führerbetätigte Vorrichtung (10) aus ihrer Park-Stellung herausbewegt wird, und einer nachgiebigen elastischen Vorrichtung (30), die auf die Steuerkurve (28) einzuwirken vermag, damit die führerbetätigte Vorrichtung (10) und die Betätigungsstange (16) unabhängig von der Steuerkurve (28) in ihre Park-Endstellungen bewegt werden können, wenn die Klinke durch Anliegen an der Oberfläche eines Zahnes (34) am Einrasten in eine Zahnlücke des Parkzahnrades gehindert ist, dadurch gekennzeichnet, daß ein Bauelement (36; 62) mit einer Gleitfläche mit der führerbetätigten Vorrichtung (10) betriebsmäßig verbunden ist und sich mit ihr bewegt, ein Bauteil (42, 78) mit einem ersten und einem zweiten Ende fern von einem seiner Enden an einer festen Stelle schwenkbar gelagert ist, und eine zweite elastische Vorrichtung (46; 80) das eine Ende (40; 82) des Bauteils in Gleitberührung mit der Gleitfläche drängt, wobei die Fläche einen ersten Abschnitt (38; 68) hat, der gleichförmig und nicht unterbrochen ist, so daß bei einer Bewegung des Bauelementes in Abhängigkeit von einer Bewegung der führerbetätigten Vorrichtung in eine beliebige Stellung, außer zwischen die Park- und die Rückwärts-Stellung, die Fläche relativ zum Bauteil gleitet, ohne dieses zu bewegen, und einen zweiten, einer Steuerkurve ähnlichen Abschnitt (50; 70) aufweist, an den sich das Bauteil anlegt, wenn das Bauelement bei einer Bewegung der führerbetätigten Vorrichtung in eine Stellung zwischen Park- und Rückwärts-Stellung bewegt wird, um über das Bauelement eine Bewegung der führerbetätigten Einrichtung zu ihrer Rückwärts-Stellung hin zu verhindern, wenn die führerbetätigte Vorrichtung unbeabsichtigt zwischen ihre Rückwärts- und Park-Stellung eingestellt worden ist.

2. Parksperre nach Anspruch 1, bei der das Bauteil (42; 78) den zweiten, steuerkurvenähnlichen Abschnitt (50; 70) der Gleitfläche vom Bauelement (36; 62) betätigt, um die führerbetätigte Vorrichtung (10) zur Park-Stellung hin zu drängen, wenn die führerbetätigte Vorrichtung (10) zuvor unbeabsichtigt zwischen ihre Rückwärts- und Park-Stellung eingestellt worden ist.

3. Parksperre nach Anspruch 1, bei der das Bauelement (36; 62) durch die führerbetätigte Vorrichtung (10) geradlinig bewegbar ist, und der erste Abschnitt (38; 68) der Gleitfläche gerade ist, wobei das eine Ende (40; 82) des schwenkbaren Bauteils bei jeder Stellung der führerbetätigten Vorrichtung (10), ausgenommen bei der Park-Stellung, elastisch an den geraden Abschnitt der Gleitfläche des Bauelementes (36; 62) angepreßt ist, und der steuerkurvenähnliche Abschnitt (50; 70) der Fläche, an den das Bauteil (42; 78) anlegbar ist, eine schräge Schulter (50; 70) in der Gleitfläche umfaßt, die am Bauelement so angeordnet ist, daß bei einer Bewegung der führerbetätigten Vorrichtung (10) um einen vorbestimmten Betrag aus ihrer Rückwärts- zu ihrer Park-Stellung hin das schwenkbare Bauteil (42; 78) sich an die Schulter (50; 70) anlegt, um das Bauelement (36; 62) und somit die führerbetätigte Vorrichtung (10) zu ihrer Parkstellung hin zu drängen.

4. Parksperre nach Anspruch 3, bei der das geradlinig bewegbare Bauelement (36) mit der Betätigungsstange (16) fest bzw. einstückig verbunden ist.

5. Parksperre nach Anspruch 3, bei der das bewegbare Bauelement (62) auf dem Getriebegehäuse verschieblich angeordnet und getrennt von der Betätigungsstange mit der führerbetätigten Vorrichtung (10) verbunden ist.

6. Parksperre nach Anspruch 2, mit einer Vorrichtung (46; 80) zum Begrenzen der Wirkung des Bauteils (42; 78) auf das Bauelement (36; 62) auf ein Maß, das einem vorbestimmten größeren Weganteil, aber weniger als dem Gesamtweg des Bauelementes (36; 62) in eine Park-Endstellung entspricht, derart, daß die anfängliche Bewegung der führerbetätigten Vorrichtung von der Park-Stellung weg vom Bauteil (42; 78) im wesentlichen nicht behindert wird.

7. Parksperre nach Anspruch 2, bei der die zweite elastische Vorrichtung (46; 80) auf das Bauteil (42; 78) wirkt, um das eine Ende desselben an die Gleitfläche (38; 68) des Bauelementes (36; 62) anzupressen, wobei die zweite elastische Vorrichtung (46; 80) eine im voraus gewählte Steifigkeit hat, derart, daß die Kraft, welche dadurch über das Bauteil (42; 78) auf die führerbetätigte Vorrichtung (10) in ihrer Bewegung aus der Rückwärts- zur Park-Stellung hin ausgeübt wird, die auf die Steuerkurve (28) wirkende Kraft der nachgiebigen elastischen Vorrichtung (30) übersteigt.

8. Parksperre nach Anspruch 7, bei der die Steifigkeit so gewählt ist, daß die Kraft der zweiten elastischen Vorrichtung (46; 80) auf die führerbetätigte Vorrichtung über einem größeren Teil, jedoch nicht über der gesamten Bewegung der führerbetätigten Vorrichtung (10) aus der Rückwärts- in die Park-Stellung die Kraft der nachgiebigen elastischen Vorrichtung (30) auf die Steuerkurve (28) übersteigt, und danach die Kraft der zweiten elastischen Vorrichtung (46; 80) auf die führerbetätigte Vorrichtung über dem übrigen Teil der Bewegung der führerbetätigten Vorrichtung (10) zur Park-Stellung hin abnimmt, derart, daß der anfängliche Widerstand, den die zweite elastische Vorrichtung (46; 80) auf die führerbetätigte Vorrichtung bei deren anfänglicher Bewegung aus der Park- in die Rückwärts-Stellung ausübt, gemindert ist.

9. Parksperre nach Anspruch 8, bei der die Kraft der zweiten elastischen Vorrichtung (46; 80) auf die führerbetätigte Vorrichtung (10) auf ungefähr Null zurückgeht, derart, daß der anfängliche Widerstand ungefähr auf Null herabgesetzt ist.

10. Parksperre nach Anspruch 8 oder 9, bei der der größere Anteil etwa 65 bis 75% der Bewegung der führerbetätigten Vorrichtung (10) aus der Rückwärts- zur Park-Stellung hin beträgt, derart, daß etwa 25 bis 35% der anfänglichen Bewegung der führerbetätigten Vorrichtung (10) aus der Park- zur Rückwärts-Stellung auf keinen wesentlichen Widerstand durch eine Gegenkraft der zweiten elastischen Vorrichtung (46; 80) trifft.

11. Parksperre nach Anspruch 7, bei der das Bauteil einen Hebel (42; 78) umfaßt, der zwischen seinen Enden ein Schwenklager (44) aufweist, wobei ein Ende (40; 82) des Hebels (42; 78) an der Gleitfläche (38; 68) des Bauelementes (36; 62) anliegt und am anderen Hebelende die zweite elastische Vorrichtung (46; 80) angreift, dabei die Steifigkeit der zweiten elastischen Vorrichtung (46; 80) so gewählt ist, daß sie mit dem Abstand der zugehörigen Enden des Hebels (42; 78) vom Schwenklager (44) zusammenwirkt.

**Revendications**

1. Frein de stationnement pour transmission automatique, comportant: un pignon de stationnement (26) solidairés à un arbre de sortie monté à rotation dans un carter fixe d'un véhicule; un cliquet (22) mobile dans le carter, entre une position de stationnement, dans laquelle ce cliquet (22) se conjugue au pignon (26), et une position de non-stationnement dans laquelle il est dégagé du pignon; des moyens (10) actionnables par le conducteur, lesquels sont mobiles dans une direction, de la position de marche arrière vers la position de stationnement, et dans la direction opposée, de la position de stationnement vers la position de marche arrière, une tige de commande (16, 76) fonctionnellement reliée aux moyens (10) actionnables par le conducteur; des moyens de commande (28) manoeuvrés en réponse au mouvement de la tige de commande et aptes à être mis en condition d'engagement avec le cliquet (22) pour commander son mouvement vers le pignon de stationnement (26) lorsque les moyens (10) actionnables par le conducteur sont déplacés vers la position de stationnement et pour commander son mouvement dans le sens de son éloignement du pignon (26) lorsque les moyens (10) actionnables par le conducteur sont écartés de leur position de stationnement; et des moyens élastiques facilement déformables (30), aptes à opérer sur les moyens de commande (28) pour permettre aux moyens (10) actionnables par le conducteur et à la tige de commande (16) d'être amenés à leurs positions de stationnement complètes inépendamment des moyens de commande (28) lorsque le cliquet se trouve au contact d'une dent (34) du pignon de stationnement, ce qui l'empêche d'entrer dans l'intervalle entre deux dents de ce pignon; caractérisé en ce qu'un élément (32) ayant une surface de glissement est fonctionnellement relié aux moyens (10) actionnables par le conducteur pour être déplacé avec eux, en ce qu'un organe (42, 78) ayant une première et une deuxième extrémité est monté à pivotement en une position fixe écartée d'une extrémité de l'organe, et des deuxièmes moyens élastiques (46, 80) obligent la première extrémité (40, 82) de l'organe à venir en condition d'engagement de glissement contre la surface de glissement, laquelle possède une première partie qui est uniforme et continue de manière que, lorsque l'élément est déplacé en réponse au mouvement des moyens actionnables par le conducteur vers n'importe quelle position, sauf entre positions de stationnement et de marche arrière, la surface glisse par rapport à l'organe sand provoquer de mouvement de celui-ci, et une deuxième partie (50, 70) analogue à une came avec laquelle l'organe vient en condition d'engagement lorsque l'élément est déplacé en réponse au mouvement des moyens actionnables par le conducteur à une position entre le stationnement et la marche arrière, pour refréner par l'intermédiaire de l'élément le mouvement des moyens actionnables par le conducteur vers la position de marche arrière lorsque les moyens actionnables par le conducteur ont été accidentellement positionnés entre leurs positions de marche arrière et de stationnement.

2. Frein de stationnement selon revendication 1, dans lequel l'organe (42, 78) agit sur la deuxième partie analogue à une came (50, 70) de la surface de glissement de l'élément (36, 62) de façon à solliciter les moyens (10) actionnables par le conducteur dans la direction de la position de stationnement, à la suite d'un positionnement accidentel des moyens (10) actionnables par le conducteur entre leurs positions de marche arrière et de stationnement.

3. Frein de stationnement selon revendication 1, dans lequel l'élément (36, 62) est déplaçable linéairement par les moyens (10) actionnables par le conducteur et la première partie (38, 68) de la surface de glissement est linéaire, la première extrémité (40, 82) de l'organe monté à pivotement étant élastiquement sollicitée pour venir en condition d'engagement avec la partie linéaire de la surface de glissement de l'élément (36, 62), cela pour toutes les positions des moyens (10) actionnables par le conducteur à l'exception de la position de marche arrière, et la partie analogue à une came (50, 70) de la surface pouvant être mise en condition d'engagement avec l'organe (42, 78) comprend un gradin oblique (50, 70) dans la surface de glissement, lequel gradin est disposé sur l'élément de façon que, lorsque les moyens (10) actionnables par le conducteur sont déplacés sur une distance prédéterminée, hors de leur position de marche arrière vers la position de stationnement, l'organe (42, 78) monté à pivotement vienne en condition d'engagement avec le gradin (50, 70) pour solliciter l'élément (36, 62) et par conséquent les moyens (10) actionnables par le conducteur dans la direction de la position de stationnement de ces derniers.

4. Frein de stationnement selon revendication 3, dans lequel l'élément (36) déplaçable linéairement est une partie intégrante de la tige de commande.

5. Frein de stationnement selon revendication 3, dans lequel l'élément déplaçable est monté à coulissement sur le carter de la transmission et est relié aux moyens (10) actionnables par le conducteur, cela séparément de la tige de commande.

6. Frein de stationnement selon revendication 2, comportant des moyens (46, 80) pour limiter l'effet de l'organe (42, 78) sur l'élément (36, 62) à une portion majeure mais inférieure au déplacement total de l'élément (36, 62) vers une position de stationnement complète, ce par quoi le mouvement initial des moyens actionnables par le conducteur hors de la position de stationnement n'est sensiblement par empêché par l'organe (42, 78).

7. Frein de stationnement selon revendication 2, dans lequel les deuxièmes moyens élastiques (46, 80) opèrent sur l'organe (42, 78) pour solliciter élastiquement la première extrémité de celui-ci pour la faire venir en condition d'engagement avec la surface de glissement (38, 68) de l'élément (36, 62), les deuxièmes moyens élastiques (46, 80) ayant une raideur présélectionnée de façon que la force ainsi exercée, par l'intermédiaire de l'organe (42, 78), sur les moyens (10) actionnables par le conducteur lors de leur mouvement de la position de marche arrière vers la position de stationnement, excède la force des moyens élastiques facilement déformables (30) agissant sur les moyens de came (28).

8. Frein de stationnement selon revendication 7, dans lequel la raideur est présélectionnée de façon que la force des deuxièmes moyens élastiques (46, 80) exercée sur les moyens actionnables par le conducteur excède la force des moyens élastiques facilement déformables (30) sur les moyens de came (28), cela pour une grande partie, mais non pour la totalité, du mouvement des moyens (10) actionnables par le conducteur, de la position de marche arrière vers la position de stationnement, après quoi la force des deuxièmes moyens élastiques (46, 80) sur les moyens actionnables par le conducteur diminue pour le reste du mouvement des moyens (10) actionnables par le conducteur en direction de la position de stationnement, ce par quoi est réduite la résistance initiale que les deuxièmes moyens élastiques (46, 80) exercent sur les moyens actionnables par le conducteur à la suite du mouvement initial de ceux-ci de la position de stationnement vers la position de marche arrière.

9. Frein de stationnement selon revendication 8, dans lequel la force que les deuxièmes moyens élastiques (46, 80) exercent sur les moyens (10) actionnables par le conducteur diminue sensiblement jusqu'à zéro, ce par quoi la résistance initiale est sensiblement réduite jusqu'à zéro.

10. Frein de stationnement selon revendication 8 ou revendication 9, dans lequel la majeure partie vaut environ 65 à 75% du mouvement des moyens (10) actionnables par le conducteur de la position de marche arrière à la position de stationnement, environ 25 à 35% du mouvement initial des moyens (10) actionnables par le conducteur, de la position de stationnement à la position de marche arrière, ne rencontrant sensiblement aucune résistance d'une force antagoniste des deuxièmes moyens élastiques (46, 80).

11. Frein de stationnement selon revendication 7, dans lequel l'organe comprend un levier (42, 78) ayant un pivot (44) entre ses extrémités, une extrémité (40, 82) de ce levier (42, 78) venant en condition d'engagement avec la surface de glissement (38, 68) de l'élément (36, 62) et l'autre extrémité du levier étant en condition d'engagement avec les deuxièmes moyens élastiques (46, 80), la raideur de ces derniers (46, 80) étant présélectionnée pour coopérer avec la distance, depuis le pivot (44), des extrémités respectives du levier (42, 78).

FIG. 1.

FIG. 2.

FIG. 3.

FIG. 4.

FIG. 6.

FIG. 5.